(19) Europäisches Patentamt
European Patent Office
Office européen des brevets

(11) Veröffentlichungsnummer: **0 176 484**
**A2**

(12) **EUROPÄISCHE PATENTANMELDUNG**

(21) Anmeldenummer: **85810428.4**

(22) Anmeldetag: **23.09.85**

(51) Int. Cl.[4]: **C 08 G 59/40**
C 08 G 59/62, C 08 G 59/68
C 08 L 63/00

(30) Priorität: **27.09.84 CH 4629/84**
**26.06.85 CH 2709/85**

(43) Veröffentlichungstag der Anmeldung:
**02.04.86 Patentblatt 86/14**

(84) Benannte Vertragsstaaten:
**BE CH DE FR GB IT LI NL**

(71) Anmelder: **CIBA-GEIGY AG**
**Klybeckstrasse 141**
**CH-4002 Basel(CH)**

(72) Erfinder: **Lauterbach, Horst, Dr.**
**Im Mühleboden 78**
**CH-4106 Therwil(CH)**

(54) **Diäthylphenyl-biguanid enthaltende härtbare Gemische und deren Verwendung.**

(57) Es werden neue härtbare Gemische beschrieben, die

a) mindestens ein Epoxidharz mit durchschnittlich mehr als einer Epoxidgruppe im Molekül,

b) als Härter mindestens ein Diäthylphenyl-biguanid der Formel I

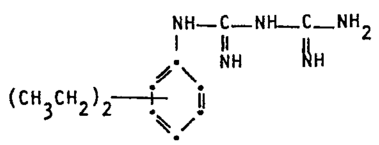

(I)

oder eine Kombination aus einem Biguanid der Formel I und einem Ketonharz, Ketonformaldehydharz oder Phenoxyharz und

c) gegebenenfalls einen Härtungsbeschleuniger enthält.

Diese Gemische eignen sich beispielsweise als Giessharze, Laminierharze und besonders als Pulverlacke.

EP 0 176 484 A2

Croydon Printing Company Ltd

CIBA-GEIGY AG 3-15087/1+2/=

Basel (Schweiz)

Diäthylphenyl-biguanid enthaltende härtbare Gemische und deren Verwendung

Die Erfindung betrifft Diäthylphenyl-biguanid enthaltende härtbare Gemische und deren Verwendung zur Herstellung gehärteter Erzeugnisse.

Biguanid und Biguanidderivate eignen sich bekanntlich als Härter für Epoxidharze enthaltende härtbare Gemische. So beschreibt beispielsweise die US Patentschrift 3.631.149 2,6-Xylenyl-biguanid Härter für Epoxidharze. Es besteht jedoch weiterhin ein Bedarf an hochreaktiven Härtern, welche verbesserte Eigenschaften aufweisen.

Gegenstand der Erfindung sind neue härtbare Gemische enthaltend

a) mindestens ein Epoxidharz mit durchschnittlich mehr als einer Epoxidgruppe im Molekül,

b) als Härter mindestens ein Diäthylphenyl-biguanid der Formel I

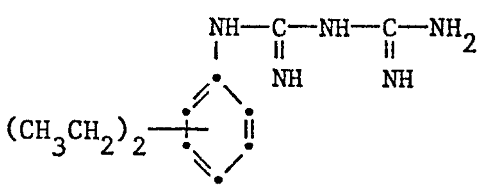

(I) und

c) gegebenenfalls einen Härtungsbeschleuniger.

Die Komponente b) ist bevorzugt 2,6-Diäthylphenyl-biguanid.

Zur Verbesserung der Lagerstabilität der erfindungsgemässen härtbaren Gemische kann das Diäthylphenyl-biguanid zusammen mit einer gegenüber dem Epoxidharz a) und dem Diäthylphenyl-biguanid im

wesentlichen chemisch inerten Substanz als Härter-Komponente b) eingesetzt werden.

Als "chemisch inerte Substanz" kommen vor allem Ketonharze, Ketonformaldehydharze oder Phenoxyharze in Frage, insbesondere solche, die zusammen mit den Biguaniden der Formel I einen Mischerweichungspunkt ergeben, der höher liegt als der Erweichungspunkt der Biguanide der Formel I.

Keton- und Ketonformaldehydharze können durch alkalische Kondensation von geeigneten Ketonen, wie Cyclohexanon oder Methylcyclohexanon, oder aus Formaldehyd und Ketonen, wie Acetophenon und Naphthalinmethylketon, hergestellt werden. Phenoxyharze sind aus Bisphenol und Epichlorhydrin aufgebaute thermoplastische Polyätherharze, die keine Epoxidgruppen sowie ein im Vergleich zu Epoxidharzen wesentlich höheres Molgewicht aufweisen.

Bevorzugt sind daher erfindungsgemässe härtbare Gemische, in denen die Komponente b) eine Kombination aus einem Biguanid der Formel I und einem Ketonharz, Ketonformaldehydharz oder Phenoxyharz, insbesondere einem Ketonformaldehydharz, ist.

Das Gewichtsverhältnis von Biguanid der Formel I zum Keton-, Ketonformaldehyd- oder Phenoxyharz beträgt im allgemeinen 40-90: 60-10, bevorzugt 50-65 : 50-35.

Als Epoxidharz der Komponente a) mit durchschnittlich mehr als einer Epoxidgruppe im Molekül, die in den erfindungsgemässen härtbaren Gemischen eingesetzt werden, seien insbesondere genannt:

Alicyclische Polyepoxide, wie Vinylcyclohexendiepoxid, Limonendiepoxid, Dicyclopentadiendiepoxid, Bis-(2,3-epoxycyclopentyl)-äther, Bis-(3,4-epoxycyclohexylmethyl)-adipat, (3',4'-Epoxycyclohexylmethyl)-3,4-epoxycyclohexancarboxylat, 3-(Glycidyloxyäthoxyäthyl)-2,4-dioxaspiro-(5.5)-8,9-epoxyundecan;

Di- oder Polyglycidyläther von mehrwertigen aliphatischen Alkoholen, wie 1,4-Butandiol, oder Polyalkylenglykolen, wie Polypropylenglykole; Di- oder Polyglycidyläther von cycloaliphatischen Polyolen, wie 2,2-Bis-(4-hydroxycyclohexyl)-propan;

Di- oder Polyglycidyläther von mehrwertigen Phenolen, wie Resorcin, Bis-(4-hydroxyphenyl)-methan (= Bisphenol F), 2,2-Bis-(4-hydroxyphenyl)-propan (= Bisphenol A) oder 2,2-Bis-(3,5-dibrom-4-hydroxyphenyl)-propan (= Tetrabrom-Bisphenol A);

Polyepoxide auf der Basis von Novolaken, besonders Phenol-Formaldehyd- oder Kresol-Formaldehyd-Novolaken;

Polyglycidylester von mehrwertigen Carbonsäuren, wie Phthalsäure, Terephthalsäure oder Hexahydrophthalsäure;

N-Glycidylderivate von Aminen, Amiden und heterocyclischen Stickstoffbasen, wie N,N-Diglycidyl-anilin, N,N-Diglycidyl-toluidin, Triglycidylisocyanurat oder N,N,N',N'-Tetraglycidyl-bis-(p-aminophenyl)-methan.

Es können auch Gemische verschiedener Epoxidharze verwendet werden. Die verwendeten Epoxidharze können fest oder flüssig sein, sind jedoch bevorzugt fest. Das Epoxidäquivalentgewicht der verwendeten Epoxidharze liegt vorteilhafterweise im Bereich von 150 g/Val bis 2500 g/Val, bevorzugt im Bereich von 500 bis 2000 g/Val.

Bevorzugt sind Epoxidharze auf der Basis von Novolaken oder mehrwertigen Phenolen; besonders bevorzugt sind solche von zweiwertigen Phenolen, insbesondere Epoxidharze auf der Basis von Bisphenol A.

Als Komponente c) können bekannte Härtungsbeschleuniger des sogenannten Amintyps eingesetzt werden. Es seien insbesondere genannt:

Das unsubstituierte Imidazol und Imidazolderivate, wie zum Beispiel 1-Methylimidazol, 2-Aethyl-4-methylimidazol, 2-Phenylimidazol, 4,5-Diphenylimidazol oder Benzimidazol; N-Acylimidazole, wie 1-(2,4,6-Trimethylbenzoyl)-2-phenylimidazol, 1-(2,6-Dichlorbenzoyl)-2-methylimidazol oder 1-(2-Chlor-6-nitrobenzoyl)-2-phenylimidazol; Pyridin und Pyridinderivate, wie 4-Aminopyridin; tertiäre Amine, wie Benzyldimethylamin oder 2,4,6-Tris-(dimethylaminomethyl)-phenol; Harnstoffderivate, wie N-(p-Chlorphenyl)-N',N'-dimethylharnstoff (= Monuron), N-Phenyl-N'N'-dimethylharnstoff, Bis-(dimethylureido)-toluol oder N,N'-Bis-(phenylcarbamoyl)-piperazin; Bortrichlorid- und Bortrifluoridkomplexe mit tertiären Aminen, wie mit Trimethylamin oder N-Benzyldimethylamin; Guanidin und Derivate davon, wie Tetramethylguanidin, oder Acylderivate, wie Acetylguanidin oder Butyrylguanidin; oder quaternäre Ammoniumsalze, wie Cholinchlorid, oder ein Alkyltrimethylammoniumbromid, das unter der Bezeichnung Morpan ® (ABM Chemical Ltd) im Handel ist.

Bevorzugte Härtungsbeschleuniger sind das Imidazol und Derivate davon, sowie ganz besonders bevorzugt das Tetramethylguanidin, und ganz besonders das Cholinchlorid.

Dabei sind vor allem Gemische mit Cholinchlorid als Härtungsbeschleuniger besonders lagerstabil.

Der Härtungsbeschleuniger wird vorzugsweise in einer Menge von 0,1 bis 5 Gewichtsteilen, bezogen auf 100 Gewichtsteile Epoxidharz, zugesetzt.

Bevorzugt sind härtbare Gemische, welche als Komponente a) ein Epoxidharz auf der Basis von mehrwertigen Phenolen, insbesondere Bisphenol A, als Komponente b) eine Kombination aus einem Biguanid der Formel I, insbesondere 2,6-Diäthylphenyl-biguanid, und einem Ketonformaldehydharz und als Komponente c) Imidazol oder insbesondere Tetramethylguanidin, ganz besonders jedoch Cholinchlorid, enthalten.

Die erfindungsgemässen härtbaren Gemische enthalten vorteilhafterweise 3 bis 20 Gewichtsteile, bevorzugt 5 bis 10 Gewichtsteile, der Komponente b), pro 100 Gewichtsteile Epoxidharz.

Die Herstellung der Biguanide der Formel I kann in an sich bekannter Weise erfolgen, zum Beispiel analog dem in der US-PS 3.631.149 beschriebenen Verfahren, indem man ein diäthylsubstituiertes Anilin mit Dicyandiamid umsetzt.

Verwendet man als Komponente b) eine Kombination aus einem Biguanid der Formel I und einen Keton-, Ketonformaldehyd- oder Phenoxyharz, so werden die beiden Komponenten vorzugsweise zusammengeschmolzen und anschliessend granuliert.

Alle Ausgangsverbindungen und weitere im erfindungsgemässen Gemisch verwendete Substanzen können nach bekannten Methoden hergestellt werden oder sind im Handel erhältlich.

Die erfindungsgemässen Gemische zeichnen sich durch eine hohe Reaktivität, verbunden mit guten Verlaufseigenschaften aus. Dies ist überraschend, da im allgemeinen bei härtbaren Gemischen auf der Basis von Epoxidharzen und Härtern des Biguanid-Typs eine erhöhte Reaktivität die Verlaufseigenschaften beeinträchtigt; so ergeben bekannte Biguanide zum Beispiel bei der Anwendung als Pulverlack Beschichtungen mit unregelmässiger Oberfläche, wodurch der Glanzeffekt leidet.

Die Härtung der erfindungsgemässen härtbaren Gemische erfolgt zweckmässig im Temperaturintervall von 120°C bis 220°C, vorzugsweise zwischen 140°C und 200°C.

Der Ausdruck "Härten", wie er hier gebraucht wird, bedeutet die Umwandlung der löslichen, entweder flüssigen oder schmelzbaren Epoxidharze in feste, unlösliche und unschmelzbare, dreidimensional vernetzte Produkte bzw. Werkstoffe, und zwar in der Regel unter gleichzeitiger Formgebung zu Formkörpern, wie Lackfilmen, Giesskörpern, Schichtstoffen und dergleichen.

Die Herstellung der erfindungsgemässen härtbaren Gemische kann in

üblicher Weise mit Hilfe bekannter Mischaggregate (Rührer, Kneter, Walzen oder im Falle fester Substanzen bzw. Pulver in Mühlen oder Trockenmischern) erfolgen. In manchen Fällen ist ein kurzes Erwärmen des Gemisches erforderlich, um eine genügende Homogenität zu erreichen.

Die erfindungsgemässen härtbaren Gemische können auch mit üblichen Modifizierungsmitteln, wie Streck-, Füll- und Verstärkungsmitteln, Pigmenten, Farbstoffen, organischen Lösungsmitteln, Weichmachern, Verlaufmitteln, Thixotropiermitteln, flammhemmenden Stoffen und Formtrennmitteln, versetzt werden.

Als Streckmittel, Verstärkungsmittel, Füllmittel und Pigmente seien zum Beispiel genannt: Steinkohlenteer, Bitumen, Textilfasern, Glasfasern, Asbestfasern, Borfasern, Kohlenstofffasern, Cellulose, Polyäthylenpulver, Quarzmehl; mineralische Silikate, wie Glimmer, Asbestmehl, Schiefermehl; Kaolin, Aluminiumoxidtrihydrat, Kreidemehl, Gips, Antimontrioxid, Bentone, Kieselsäureaerogel ("AEROSIL®"), Lithopone, Schwerspat, Titandioxid, Russ, Graphit, Oxidfarben, wie Eisenoxid, oder Metallpulver, wie Aluminiumpulver.

Als organische Lösungsmittel eignen sich für die Modifikation der erfindungsgemässen Gemische z.B. Toluol, Xylol, n-Propanol, Butylacetat, Aceton, Methylketon, Diacetonalkohol, Aethylenglykolmonomethyläther, -monoäthyläther und -monobutyläther.

Als Weichmacher können zum Beispiel Dibutyl-, Dioctyl- und Dinonylphthalat, Trikresylphosphat oder Polypropylenglykole eingesetzt werden.

Als Verlaufsmittel, speziell im Oberflächenschutz, kann man beispielsweise Benzoin, Silikone, Celluloseacetobutyrat, Polyvinylbutyrat, Acrylcopolymerisate, Wachse oder Stearate, welche z.T. auch als Formtrennmittel Anwendung finden, zusetzen.

Speziell für die Anwendung auf dem Lackgebiet können die Epoxidharze ferner in bekannter Weise mit Carbonsäuren, wie insbesondere höheren ungesättigten Fettsäuren, partiell verestert sein. Es ist auch möglich, solchen Lackharzformulierungen andere härtbare Kunstharze, wie Phenoplaste oder Aminoplaste, zuzusetzen.

Die erfindungsgemässen härtbaren Gemische finden ihren Einsatz vor allem auf den Gebieten des Oberflächenschutzes, der Elektrotechnik, der Laminierverfahren und im Bauwesen. Sie können in jeweils dem speziellen Anwendungszweck angepasster Formulierung, in ungefülltem oder gefülltem Zustand als Pressmassen, Wirbelsinterpulver, Giessharze, Spritzgussformulierungen, Imprägnierharze und Klebemittel, als Werkzeugharze, Laminierharze und bevorzugt als Pulverlacke verwendet werden.

Beispiel A: Herstellung der Komponente b)

56,8 g 2,6-Diäthylphenyl-biguanid (Erweichungspunkt: 72°C) und 40,0 g "Kunstharz SK"® (ein Ketonformaldehydharz der Firma Hüls; Erweichungspunkt: 134°C) werden bei 140°C zusammengeschmolzen. Nach dem Erstarren in einer flachen Wanne wird die Schmelze granuliert (Erweichungspunkt: 120°C; Korngrösse: ca. 2 mm).

Beispiel 1

In einem Extruder (Ko-Kneter der Firma Buss) werden bei 80°C folgende Komponenten gemeinsam homogenisiert:

601 g eines mit Fettsäure modifizierten Harzgemisches auf der Basis von Bisphenol A (Epoxidäquivalentgewicht: 900 g/Val; Erweichungspunkt gemäss DIN 51 920: 93°C),
35 g der Härterkomponente b) aus Beispiel A,
1,3 g Benzoin, sowie
318 g Titandioxid.

Nach dem Abkühlen wird das Gemisch in einer Pralltellermühle bis zu einer durchschnittlichen Partikelgrösse von 40 µm (Mikrometer) zerkleinert.

Der so hergestellte Pulverlack wird elektrostatisch auf ein Aluminiumblech aufgesprüht und während 10 Minuten bei 170°C eingebrannt. Der entstandene Lackfilm weist eine Schichtdicke von 60-70 µm auf. Dessen Eigenschaften sind in der Tabelle zusammengefasst.

Beispiel 2

Man geht wie im Beispiel 1 vor, jedoch mit dem Unterschied, dass dem Gemisch 1,3 g Tetramethylguanidin zugesetzt werden. Das Einbrennen erfolgt während 10 Minuten bei 155°C. Trotz der deutlich höheren Reaktivität des verwendeten Gemisches entsteht ein Lackfilm, der, wie aus der nachfolgenden Tabelle ersichtlich ist, gleich gute Verlaufseigenschaften zeigt wie der Lackfilm aus Beispiel 1.

Beispiel 3: Folgende Komponenten werden wie in Beispiel 1 beschrieben gemischt und zu einem Pulverlack verarbeitet:

990 g eines Epoxidharzes auf der Basis von Bisphenol A (Epoxidwert: 1,3 Val/kg; Erweichungspunkt gemäss DIN 51 920: 98°C),
10 g eines Verlaufsmittels auf Basis eines Acrylcopolymerisates (Acronal® 4F der Fa. Bayer),
90 g der Härterkomponente b) aus Beispiel A,
10 g Cholinchlorid,
2 g Benzoin, sowie
551 g $TiO_2$.

Der Pulverlack wird wie in Beispiel 1 beschrieben auf ein Aluminiumblech gesprüht und eingebrannt. Die Eigenschaften des entstandenen Lackfilms sind in der Tabelle aufgeführt.

Die Messwerte der folgenden Prüfungen werden in der Tabelle angegeben:

1. Verlauf: gemäss DIN 53 230. Dies stellt eine optische Beurteilung der Oberfläche dar. Mittels einer Vergleichsskala wird festgestellt, inwiefern die Oberfläche vom idealen Hochglanz abweicht und eine orangenschalen-ähnliche Struktur zeigt. Die Beurteilung kann mit den Begriffen "ausgezeichnet", "sehr gut", "gut", "mässig", "schlecht" und " sehr schlecht" wiedergegeben werden, wobei der Idealzustand "ausgezeichnet" praktisch nicht erreicht wird.

2. Schlagprüfung nach Erichsen: Man lässt einen 1 kg schweren Bolzen rückseitig auf eine mit Lack überzogene Platte mit 1,60 kg•m fallen, wodurch eine Beule entsteht. Die Prüfung wird mit dem Ausdruck "erfüllt" bezeichnet, wenn die Lackschicht, trotz Beule, vollständig unbeschädigt bleibt, und mit "nicht erfüllt" bezeichnet, wenn die Lackschicht auch nur die geringste Beschädigung erleidet.

3. Gelbwert: gemäss DIN 6167. Der Gelbwert gibt Aufschluss über die Thermostabilität des Lackfilms. Der Wert ist, wie bei der Verlaufprüfung, ohne Einheit.

4. Minimale Einbrenntemperatur (°C): gemäss DIN 55 990.

Sie ist ein wichtiges Mass für die Reaktivität des Harz-Härter-Gemisches.

Tabelle

| Beispiel | Verlauf | Schlagprüfung | Gelbwert | Minimale Einbrenntemperatur (°C)*) |
|---|---|---|---|---|
| 1 | sehr gut bis ausgezeichnet | erfüllt | 1 | 170 |
| 2 | sehr gut bis ausgezeichnet | erfüllt | 4,5 | 155 |
| 3 | sehr gut bis ausgezeichnet | erfüllt | 3 | 165 |

*) bei einer Einbrennzeit von 10 min.

Aehnlich gute Resultate werden erzielt, wenn man im obigen Beispiel 2 anstelle von 1,3 g Tetramethylguanidin 1,1 g Imidazol verwendet.

Patentansprüche

1. Härtbares Gemisch enthaltend

   a) mindestens ein Epoxidharz mit durchschnittlich mehr als einer Epoxidgruppe im Molekül,

   b) als Härter mindestens ein Diäthylphenyl-biguanid der Formel I

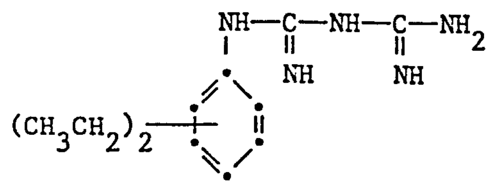

(I) und

   c) gegebenenfalls einen Härtungsbeschleuniger.

2. Gemisch nach Anspruch 1, das als Komponente b) 2,6-Diäthylphenyl-biguanid enthält.

3. Gemisch nach Anspruch 1, das als Komponente b) eine Kombination aus einem Biguanid der Formel I und einem Ketonharz, Ketonformaldehydharz oder Phenoxyharz enthält.

4. Gemisch nach Anspruch 3, das als Komponente b) eine Kombination aus einem Biguanid der Formel I und einem Ketonformaldehydharz enthält.

5. Gemisch nach Anspruch 1, das als Komponente a) ein Epoxidharz auf der Basis von Bisphenol A enthält.

6. Gemisch nach Anspruch 1, das als Komponente c) Imidazol, ein Derivat davon oder Tetramethylguanidin enthält.

7. Gemisch nach Anspruch 6, das als Komponente c) Imidazol oder insbesondere Tetramethylguanidin enthält.

8. Gemisch nach Anspruch 1, das als Komponente a) ein Epoxidharz auf der Basis von Bisphenol A, als Komponente b) eine Kombination aus 2,6-Diäthylphenyl-biguanid und einem Ketonformaldehydharz und als Komponente c) Imidazol oder insbesondere Tetramethylguanidin enthält.

9. Gemisch nach Anspruch 1, das als Komponente c) ein quaternäres Ammoniumsalz enthält.

10. Gemisch nach Anspruch 9, das als Komponente c) Cholinchlorid enthält.

11. Verwendung des Gemisches nach Anspruch 1 zur Herstellung von gehärteten Produkten durch Erhitzen.

12. Verwendung des Gemisches nach Anspruch 1 als Pressmassen, Wirbelsinterpulver, Giessharz, Spritzgussformulierung, Imprägnierharz, Klebemittel, Werkzeugharz, Laminierharz oder Pulverlack.

FO 7.3/ACK/gs*